(19) Europäisches Patentamt
European Patent Office
Office européen des brevets

(11) EP 3 684 829 B1

(12) **EUROPEAN PATENT SPECIFICATION**

(45) Date of publication and mention of the grant of the patent:
**20.09.2023 Bulletin 2023/38**

(21) Application number: **18773374.6**

(22) Date of filing: **12.09.2018**

(51) International Patent Classification (IPC):
***C08G 18/28*** *(2006.01)* ***C08G 101/00*** *(2006.01)*
***C08G 18/10*** *(2006.01)* ***C08G 18/12*** *(2006.01)*
***C08G 18/32*** *(2006.01)* ***C08G 18/42*** *(2006.01)*
***C08G 18/40*** *(2006.01)* ***C08G 18/48*** *(2006.01)*
***C08G 18/66*** *(2006.01)* ***C08G 18/76*** *(2006.01)*
***C08G 18/79*** *(2006.01)* ***C08G 18/20*** *(2006.01)*

(52) Cooperative Patent Classification (CPC):
(C-Sets available)
**C08G 18/2855; C08G 18/2063; C08G 18/2081; C08G 18/3206; C08G 18/324; C08G 18/4018; C08G 18/4238; C08G 18/4837; C08G 18/4854; C08G 18/6674; C08G 18/6677; C08G 18/6685; C08G 18/7671; C08G 18/797;** C08G 2101/00;

(Cont.)

(86) International application number:
**PCT/EP2018/074645**

(87) International publication number:
**WO 2019/057589 (28.03.2019 Gazette 2019/13)**

(54) **COMPOSITION AND METHOD TO PRODUCE MICROCELLULAR POLYURETHANE FOAM SYSTEMS**

ZUSAMMENSETZUNG UND VERFAHREN ZUR HERSTELLUNG MIKROZELLULÄRER POLYURETHANSCHAUMSYSTEME

COMPOSITION ET PROCÉDÉ DE PRODUCTION DE SYSTÈMES DE MOUSSE DE POLYURÉTHANE MICROCELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2017 PCT/CN2017/102767**

(43) Date of publication of application:
**29.07.2020 Bulletin 2020/31**

(73) Proprietor: **BASF SE**
**67056 Ludwigshafen (DE)**

(72) Inventors:
- **ZHANG, Li**
**Shanghai 200137 (CN)**
- **SCHUETTE, Markus**
**49448 Lemfoerde (DE)**
- **WU, Xiaojun**
**Shanghai 200137 (CN)**
- **WANG, Cai An**
**Shanghai 200137 (CN)**
- **ZHANG, Ren Zheng**
**Shanghai 200137 (CN)**

(74) Representative: **BASF IP Association**
**BASF SE**
**GBI-C006**
**67056 Ludwigshafen (DE)**

(56) References cited:
**EP-A1- 1 225 199 US-A- 4 757 095**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08G 2110/0008; C08G 2110/0066;
C08G 2110/0083

C-Sets
**C08G 18/10, C08G 18/2855;**
**C08G 18/10, C08G 18/6677;**
**C08G 18/10, C08G 18/6685;**
**C08G 18/12, C08G 18/2855;**
**C08G 18/12, C08G 18/6674;**
**C08G 18/12, C08G 18/6681**

## Description

### BACKGROUND

The present invention is directed to a composition which can produce, *inter alia,* elastomeric microcellular foam, preferably polyurethane foam having improved and well-balanced mechanical properties.

Polyurethane is a polymer composed of organic units joined by carbamate (urethane) links. Polyurethane is typically produced by the reaction of a polyisocyanate with a polyol. Polyurethanes are used in the manufacture of high-resilience foam seating, rigid foam insulation panels, microcellular foam seals and gaskets, durable elastomeric wheels and tires, automotive suspension bushings, electrical potting compounds, high performance adhesives, surface coatings and surface sealants, synthetic fibers, carpet underlay, hard-plastic parts, condoms, and hoses and so on.

For elastomeric microcellular foam, preferably polyurethane foam, usually, split tear is an important, yet difficult to improve property, especially under fixed foam density. Actions usually have been done on changing formulation substantially. However, in such cases, other physical properties are often compromised.

For example, in Journal of Cellular Plastics, 36, pp 286 (2000), Sawai et. al. has shown the relationship between stress F, proportional constant *C*, resin strength *f*, cell diameter d and foam density ρ in the case of brittle transmission of crack for polyurethane foam:

$$F = Cf\sqrt{\pi d}(\rho)^2$$

According to the formula above, to increase the split tear, there are a few ways: **1**) to increase the resin strength for the resin without foaming, which is usually achieved by using polyester polyol instead of polyether polyol, however, the use of polyester polyol will lead to poor hydrolysis resistance, reducing the life time of footwear foam; and **2**) to increase density of foam, however, for a fixed shape/volume of midsole, this will lead to heavier finished product, which is unacceptable to the consumer; **3**) to increase the cell diameter when the density and resin strength is fixed, however, it is impossible to increase cell diameter without influence on other properties negatively. In short, so far there is no effective way to increase the split tear and preserving the original mechanical properties at the same time. Therefore, there is a need to find a system so that good split tear could be achieved without compromising other physical properties.

EP 1225199 A1 disclosed microcellular polyurethane flexible foams suitable for use as lightweight shoe sole components, which are produced by dissolving carbon dioxide into one or both of the iso-side or resin-side of an isocyanate-prepolymer-based microcellular polyurethane foam formulation. The resultant foams possess more uniform cell structure and enhanced physical properties as compared to all water-blown foams of the same basic formulation and density. The hardness of the foams is more suitable for shoe sole, particularly midsole applications, than that of the water-blown foams, despite the lower urea hard segment content of the $CO_2$ blown foams.

### SUMMARY OF THE INVENTION

The present inventor has found that, using lactam as an additive, it is possible to significantly increase mechanical properties of elastomeric microcellular foam, preferably polyurethane foam, such as split tear, without substantially compromising other physical properties.

The present inventor has also found that the effect of lactam is more apparent with silicon oil present in the composition to produce the elastomeric microcellular foam, preferably polyurethane foam.

The present inventor has also found that the present invention is particularly useful when polytetrahydrofuran is present in the inventive composition to produce polyurethane foam, either as the sole polyol or as one of the polyols in the composition.

### DETAILED DESCRIPTIONS

The present invention discloses a composition to produce elastomeric microcellular foam, preferably polyurethane foam, which comprise: a polyisocyanate, a compound with at least two groups reactive toward isocyanates, preferably a polyol, so that the remaining substructure of the compound is connected with the polyisocyanate, a lactam, a surfactant, and a blowing agent.

**POLYISOCYANATE**. The polyisocyanates used in the present invention are those conventionally used in the preparation of polyurethane foams and can be either monomeric polyisocyanate or polyisocyanate prepolymer.

The monomeric polyisocyanates used in the present invention, preferably monomeric diisocyanate, can be exemplified by aromatic diisocyanates such as toluene diisocyanate (TDI) and/or methylene diphenyl diisocyanate (MDI). Aliphatic and/or cycloaliphatic isocyanates, such as 1,6-hexamethylene diisocyanate (HDI), 1-isocyanato-3-isocyanato-methyl-3,5,5-trimethylcyclohexane (isophorone diisocyanate, IPDI), and/or 4,4'-diisocyanato dicyclohexylmethane (H12MDI or hydrogenated MDI) can also be used. It is also possible to use mixtures of the polyisocyanates.

The polyisocyanate prepolymer can be obtainable by reacting an excess of isocyanates with one or more compounds having at least two groups reactive toward isocyanates, preferably hydroxyl groups and/or amino groups, at temperatures of for example 30 to 100°C. The NCO content of polyisocyanate prepolymers of the invention is preferably from 10 to 33% by weight in polyisocyanates. Note that the compound having at least two groups reactive toward isocyanates used in the formation of the polyisocyanate prepolymer can be the same or different from the compound having at least two groups reactive toward isocyanates in the formation of the elastomeric microcellular foam, preferably polyurethane foam.

The compound with at least two groups reactive toward isocyanates, so that the remaining substructure of the compound is connected with the polyisocyanates. The compound is preferably polyol.

**POLYOL.** The polyols used in the present invention are those conventionally used in the preparation of polyurethane foams. The most commonly used polyols are those referred to as polyether polyols and/or polyester polyols. However, the polyol used in the composition of the present invention can be replaced by any compounds having at least two groups reactive toward isocyanates, such as -OH, -SH, $-NH_2$, -COOH, and $-CH_2$-acidic groups, although the reaction products with said polyisocyanates are no longer what is typically referred to as polyurethane. For example, when the polyol is replaced with a compound with two $-NH_2$ groups, polyurea is obtained. The acidic groups of $-CH_2$-acidic groups could be used common acidic groups, such as $-H_2PO_4$, $-HCO_3$, and/or -COOH. The implementation of the present invention using such compound in the place of polyols can be envisioned by those skilled in the art.

The polyether polyols used in the inventive composition can be obtained by known processes, for example via anionic or cationic polymerization of alkylene oxides with the addition of at least one starter molecule comprising from 2 to 8, preferably from 2 to 6, and particularly preferably from 2 to 4, reactive hydrogen atoms, in the presence of a catalyst. The catalyst to produce polyether polyol can be, in the case of anionic polymerization, alkali metal hydroxides, such as sodium hydroxide or potassium hydroxide, or alkali metal alcoholates, such as sodium methoxide, sodium ethoxide, potassium ethoxide, and/or potassium isopropoxide, or, in the case of cationic polymerization, Lewis acids, such as antimony pentachloride, boron trifluoride etherate, and/or bleaching earth. Other catalysts that can be used are double-metal cyanide compounds, known as DMC catalysts. The alkylene oxides used preferably comprise one or more compounds having from 2 to 4 carbon atoms in the alkylene moiety, e.g. tetrahydrofuran, ethylene oxide, propylene 1,2-oxide, butylene 1,2-oxide or butylene 2,3-oxide, in each case alone or in the form of a mixture, and preferably propylene 1,2-oxide and/or ethylene oxide, in particular propylene 1,2-oxide. Examples of starter molecules that can be used are ethylene glycol, diethylene glycol, glycerol, trimethylolpropane, pentaerythritol and/or sugar derivatives, such as sucrose, hexitol derivatives, such as sorbitol, methylamine, ethylamine, isopropylamine, butylamine, benzylamine, aniline, toluidine, toluenediamine, naphthylamine, ethylenediamine, diethylenetriamine, 4,4'-methylenedianiline, 1,3-propanediamine, 1,6-hexanediamine, ethanolamine, diethanolamine, triethanolamine, and also other di- or polyhydric alcohols, or di- or polybasic amines.

Polyester polyols used in the inventive composition can be obtained by known processes, for example by the polycondensation of multifunctional carboxylic acids and polyols, such as adipic acid and 1,4-butanediol. The polyester polyols used are preferably produced via condensation of polyhydric alcohols having from 2 to 12 carbon atoms, e.g. ethylene glycol, diethylene glycol, butanediol, trimethylolpropane, glycerol, or pentaerythritol, with polybasic carboxylic acids having from 2 to 12 carbon atoms, e.g. succinic acid, glutaric acid, adipic acid, suberic acid, azelaic acid, sebacic acid, decanedicarboxylic acid, maleic acid, fumaric acid, phthalic acid, isophthalic acid, terephthalic acid, and the isomers of naphthalenedicarboxylic acids, or their anhydrides.

It is also possible to use mixtures of the polyether polyols and/or polyester polyols, even mixture of one or more polyether polyols and one or more polyester polyols, of course.

The level of the polyol in the present invention could be chosen from the conventional level of elastomeric microcellular polyurethane foam, preferably is 71-99.7% by weight, more preferably is 80-98% by weight, based on the total weight of component A.

**POLYTETRAHYDROFURAN POLYOL.** In a preferred embodiment, the polyol at least comprises polytetrahydrofuran. In other words, said polytetrahydrofuran can be either the sole polyol in the inventive composition, or as one of the polyols in the inventive composition. The polytetrahydrofuran polyols of the present invention are those conventionally used in the preparation of polyurethane foams and are preferably those with average Mn of 140 to 3500, more preferably 650 to 2000.

**SURFACTANT.** The composition of the present invention may also comprise surfactant, such as polydimethylsiloxane-polyoxyalkylene block copolymers, silicon oils, nonylphenol ethoxylates, and other organic compounds. Surfactant are applied in the foaming system to regulate the sell structure and/or stabilize the foam, it also can be termed as stabilizer in some other occasion.

SILICON OIL. In a preferred embodiment, the inventive composition comprises silicon oil as surfactant. Said silicon oil is preferably polysiloxane and polyether-polydimethylsiloxane copolymer, more preferably polyether-polydimethyl siloxane copolymer. Silicon oil can be either one specific kind of silicon oil or mixture thereof. It is possible to use additional surfactant other then said silicon oil.

The level of the silicon oil can be either that commonly used in the art; however, it is also possible to add additional silicon oils to the inventive composition so that the level of silicon oil is made higher. Specifically, the level of silicon oil can be 0.1-4%, preferably 0.5-4%, more preferably 0.5-2%, most preferably 0.5-1%, or 1-2% by weight, based on the total weight of component A (see below for the definition of components A and B).

The silicon oil used in the present invention can be either the silicon oil used as surfactant in the art; however, it is also possible to be added as an additional or alternative ingredient separately.

OTHER INGREDIENTS. Other known, conventional ingredients, many of them optional, can be used in the inventive composition to produce polyurethane foam. Typical examples are catalysts, blowing agents, chain extenders and crosslinkers.

**CATALYST.** The composition of the present invention may comprise catalysts to accelerate various reactions. Factors affecting catalyst selection include balancing three reactions: urethane (polyol+isocyanate, or gel) formation, the urea (water+isocyanate, or "blow") formation, or the isocyanate trimerization reaction (e.g., using potassium acetate, to form isocyanurate rings). Well known polyurethane catalysts include tertiary amine, alkyl tin carboxylates, oxides and mercaptides oxides and amines.

BLOWING AGENT. In order to produce polyurethane forms, a blowing agent which produced gas during the polymerization of the urethane is added to the composition of the present invention. The normally used blowing agent is physical blowing agents which has low melting point and transform from liquid to gas when temperature increased during reaction, such as HFO (hydrofluoronated olefins), and/or chemical blowing agents which produce gas via reacting with isocyanate groups, such as water.

**CHAIN EXTENDER AND CROSSLINKER.** The composition of the present invention may also comprise chain extenders and crosslinkers such as ethylene glycol, 1,4-butanediol (1,4-BDO or BDO), 1,6-hexanediol, cyclohexane dimethanol and hydroquinone bis(2-hydroxyethyl) ether (HQEE), alkyl tin carboxylates, triethylenediamine (TEDA, or DABCO, 1,4-diazabicyclo[2.2.2]octane), dimethylcyclohexylamine (DMCHA), and dimethylethanolamine (DMEA), and dibutyltin dilaurate.

The level of the catalyst, the blowing agent, the chain extender and the crosslinker could be chosen from the conventional level of elastomeric microcellular foam, preferably is 0.1-10% by weight, more preferably is 3-7% by weight, based on the total weight of component A.

**LACTAM.** The present inventor has found that, using lactam as an additive, it is possible to significantly increase mechanical properties such as split tear, without compromising other physical properties.

Lactam of the present invntion can be the compound of the following formula:

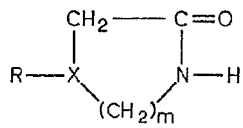

wherein X is a CH group, R is an hydrogen, m is an integer of 0 or an integer of 1, 2, 3, 4, 5, 6, 7, 8 or 9, or X is a nitrogen atom, R is a C1 to C18 alkyl group, a C7 to C15 aralkyl group or a pyridine group, which is optionally substituted with C1 to C6 alkyl groups, m is 3.

Lactam that can be used in the present invention includes butyrolactam, valerolactam, caprolactam, 1-N-Methyl-hexyhydro-1,4-diazapinon-(3), 1-N-Ethyl-hexahydro-1,4-diazepinon-(3), 1-N-Propyl-hexahydro-1,4-diazepinon-(3). Preferred lactam is ε-caprolactam.

The level of lactam in the composition is 0.1 to 15%, preferably 0.2 to 5% by weight based on the total weight of component A (see below for the definition of components A and B).

Lactam used in the present invention can be obtained commercially. For example, ε-caprolactam. is available from BASF or Ningbo Huajia Chemical Co. Ltd. as chemical reagents.

In a preferred embodiment, lactam and said surfactant, preferably silicon oil can be used in combination.

The level of the lactam in the present invention is preferable 0.1-15% by weight, more preferable is 0.5-5.5% by weight, based on the total weight of component A.

**FORMULA.** Each of the ingredients in the composition of the present invention, particularly lactam, silicon oil and polytetrahydrofuran, can be one specific compound, or a blend of more than one compounds.

Respective chemicals are available commercially. For example, silicon oil is available from Air Product or DEGUSSA/GOLDSCHMIDT as Dabco series or Tegostab series. Polytetrahydrofuran is available from BASF, Mitsubishi Group under the trade name Polytetrahydrofuran 2000, PTMEG 2000.

In the production of the elastomeric microcellular foam, preferably polyurethane foam of the present invention,

the full formula of the composition in the present invention is used as two components, namely components A and B, wherein component A comprises the compound with at least two groups reactive toward isocyanates, preferably a polyol, the lactam, the surfactant, the blowing agent and other optional additives such as chain extender, catalysts, i.e. component A comprises all the ingredients in the composition except polyisocyanates. While component B is polyisocyanate, unless specified otherwise. The two components are prepared in advance and mixed together to produce the polyurethane foam of the present invention. An isocyanate index, in short "index", which is a measure for the excess isocyanate used relative to the theoretical amount, is required. The index can be calculated as the molar ratio of isocyanate group in component B to the groups reactive toward isocyanates in component A (in the case of polyol, hydroxyl group) multiplied by 100.

A typical formula of the inventive composition and ranges of the respective ingredients are listed below. It is apparent that those skilled in the art can fine-tune the exact level of ingredients as needed, as long as there is no significant negative impact made to the properties of the product. The levels are based on the weight of the component in which it is added to the composition of the present invention. Note that the weight of 1 part by weight of component A is not necessaries the same as that of 1 part by weight of component B. All the ingredients in components A and B should add up to 100 parts, respectively.

| Component A/B | Ingredient | Broadest range (parts by wt) | Preferred range (parts by wt) |
|---|---|---|---|
| A | Polyol | 71-99.7 | 80-98 |
| A | Lactam | 0.1-15 | 0.5-5.5 |
| A | Surfactant | 0.1-4 | 0.5-1.6 |
| A | Additives (catalyst, chain extender, crosslinker, blowing agent, etc.) | 0.1-10 | 3-7 |
| B | Polyisocyanate | 100 | 100 |

The present invention is further directed to a process to produce an elastomeric microcellular foam, preferably polyurethane foam, from the inventive composition. The production process *per se* can be known, wherein premixed component A comprising the compound with at least two groups reactive toward isocyanates, preferably polyol, the surfactant, the blowing agent and other optional additives, and component B comprising isocyanate, at a certain index, are injected into a mold where the two components are mixed and reacts into an elastomeric microcellular foam, preferably polyurethane foam. The mold could be either at room temperature or preheated. The index can be optimized to achieve better properties.

According to the present invention, split tear of microcellular foam polyurethane can be increased significant by adding a minor amount of lactam, and other physical properties have not been compromised.

Furthermore, according to the present invention, an even better performance can be achieved using the combination of lactam and silicon oil. In other words, in the inventive formula, lactam and silicon oil produces a synergistic effect leading to better performance. As the amounts of lactam and silicon oil are small, the cost for such advantage is insignificant.

The advantage of the present invention can be demonstrated using polyether polyol, such as polytetrahydrofuran.

The present invention also provides flexibilities in the optimization of index. For those formulas with polytetrahydrofuran as the sole polyol or at least of one type of polyol (wherein more than one type of polyol is used in the formula), it is usually difficult to optimize the index to a value close to 100. Such index is less preferred as it means there will be unreacted isocyanate group or the functional group used to react with the isocyanate group in the foam produced. It was found that the index value can be easily tuned to a value closer to 100 in the presence of lactam, preferably ε-caprolactam.

The present invention also provides flexibilities to improve the mechanical strength of polyurethane microcellular foam material in which polytetrahydrofuran or polytetrahydrofuran hybrid with polyether polyol/polyester polyol plays as the polyol of target polyurethane system. This enables the obtainment of a flexible formula of the inventive composition.

## INDUSTRIAL APPLICATION

Potential applications of the invention include but are not limited to footwear foam, synthetic leather, and other elastomeric foam applications

## EXAMPLES

MEASUREMENT OF PHYSICAL PROPERTIES. Split tear is measured according to SATRA TM65, which is a test used to assess the split tear strength of cellular materials. When conducting a test, rectangular specimens are split for part of their length, parallel to the top and bottom faces and through mid-thickness. This produces two tongues which are clamped into the jaws of the tensile tester. During the test, the jaws are separated at a specified rate and the maximum force needed to propagate the split is recorded. The tests are conducted with sample thickness of 10 mm.

Free rise density is determined by placing the polyurethane foam-forming reaction mixture into a paper cup immediately before foaming, and, after fully foamed and cured, removing the foam outside the paper cup, weight the polyurethane foam in the paper cup, and dividing the weight of the polyurethane foam by the volume of cup.

Article density is the density of molded polyurethane foam plates/samples with over packing ratio above 1.0.

Hardness (Asker C) is measurement according to ASTM D2240, with distance between the test point and the edge of the test specimen at least 13 mm, and the points are spaced at least 5 mm. The test was run on a HPE II-Asker C electronic durometer. The test result is calculated by testing 5 point, then give a range as final result (such as: 50-56).

Rebound is tested according to ASTM D2632, with the test specimen placed vertically. The downside of the test specimen was used. A GT-7042-v1 Vertical Rebound test machine was used. The test result was obtained by running the test for six times and recording the last three results.

FORMULA OF THE COMPOSITION. Materials used are listed below:

| | |
|---|---|
| Polyol 1 | Polytetrahydrofuran having an OH number of 56 mg KOH/g |
| Polyol 2 | Polyether polyol based on glycerol, propylene oxide and ethylene oxide, having an OH number of 27 mg KOH/g and a viscosity of 1225 mPas at 25°C. |
| Polyol 3 | Polyester polyol based adipic acid, monoethylene glycol and butanediol, having an OH number of 56 mg KOH/g. |
| Polyol 4 | Polyether polyol based on propane-1,2-diol, propylene oxide and ethylene oxide, having an OH number of 29.5 mg KOH/g and a viscosity of 760 mPas at 25°C. |
| Polyol 5 | Polyester polyol based adipic acid, monoethylene glycol and butanediol, having an OH number of 56 mg KOH/g and a viscosity of 625 mPas at 75°C. |
| Chain Extender 1 | 1,4-butanediol |
| Chain Extender 2 | Monoethylene glycol |
| Chain Extender 3 | Diethyltoluenediamine |
| Crosslinker 1 | Trifunctional crosslinker with an OH number of 1603 mg KOH/g. |
| Water | Distilled water prepared in lab |
| Silicon oil 1 | Polyether polydimethylsiloxane copolymer with Mn of $3.3\times10^3$ from Evonik |
| Silicon oil 2 | Mixture of octamethylcyclotetrasiloxane and poly-siloxane from Momentive |
| Silicon oil 3 | Polysiloxane based silicone surfactant from Air Products |
| Caprolactam | Organic compound with the formula $(CH_2)_5C(O)NH$ from BASF SE |
| Catalyst 1 | Lupragen N203® from BASF Polyurethanes |
| Catalyst 2 | Delayed action catalyst based on 1,4-Diazabicyclo[2.2.2]octane (DABCO) |
| Catalyst 3 | Catalyst based on 1,8- Diazabicyclo (5.4.0)undec-7-ene from Evonik |
| Catalyst 4 | Catalyst based on bismuth |
| Isocyanate 1 | 4,4'-MDI |
| Isocyanate 2 | 4,4'-MDI and carbodiimide-modified 4,4'-MDI |
| Isocyanate 3 | Isocyanate prepolymer based on Isocyanate 1, Isocyanate 2 with polyol 1 and an NCO content of 18%; |
| Isocyanate 4 | Isocyanate prepolymer based on Isocyanate 1, Isocyanate 2 with polyol 5 and an NCO content of 18%; |

(continued)

| | |
|---|---|
| Isocyanate 5 | Isocyanate prepolymer based on Isocyanate 2 with polyol 4 and an NCO content of 19%. |

Isocyanates 3, 4 and 5 are prepolymers. Unlike monomeric Isocyanates 1 and 2 which can be used as received, prepolymers must be prepared in advance. To do so, a 2 L 4-neck flask equipped with a blade stirrer, a thermometer, nitrogen inlet means was initially charged with defined amount of monomeric isocyanates and was heated to 60°C. At 60°C, defined amount of monomeric polyol was added in 30 minutes under agitation. After all components had been added, the mixture was heated to a temperature of 80°C and stirred at 80°C for 2 hours followed by cooling down to room temperature and determination of the prepolymer's NCO value 24 hours later.

The respective amounts of monomeric polyisocyanates and polyols are listed below.

| Prepolymer produced | Isocyanate 1 (g) | Isocyanate 2 (g) | Polyol 1 (g) | Polyol 4 (g) | Polyol 5 (g) |
|---|---|---|---|---|---|
| Isocyanate 3 | 534 | 60 | 400 | | |
| Isocyanate 4 | 553 | 60 | | | 376 |
| Isocyanate 5 | 580 | 20 | | 400 | |

PROCESS TO PRODUCE POLYURETHANE FOAM. The full formula of the composition of the present invention is divided into two packages, packages A and B. Package B is made by weighting the specified amount of polyisocyanate in a glove box under dry nitrogen protection. Package A is made by weighting the specified amounts of all other ingredients and mixed at room temperature.

The elastomeric microcellular polyurethane foam of the invention is prepared by either manual trial or machine trial.

In a manual trail, components A and B are manually mixed at a predefined index with a stirrer at room temperature, and then pour in to 50°C mold, followed by demolding after 7 minutes.

In a machine trial, a Hai Feng or Green Machine device is used. Components A and B are preheated to defined temperatures, followed by injecting to 50°C mold, and demolding after 7 minutes.

For a machine trial, optimized index (opt) is determined by a "drop test". The test consists of indenting a needle on the foam under a defined load at a particular time. The indentation is measured after a certain time (usually 15 seconds of indentation). It's necessary to vary the start time of indentation to see the maximum variation in deflection: It usually occurs 5-10 seconds after the pinch time. The pinch time (PT) is the time from start of pouring/injection of the material till the polyurethane foam gets cured developing sufficient strength. It is usually determined by pinching the foam by nails till the foam is strong enough to resist the peeling. It determines the state of curing of the foam. The pinch time is the indication of the demolding time. Higher the pinch time longer the demolding time and *vice versa.* The indentation is usually measured in mm on application of a defined load. The minimum indentation value gives the optimum ratio thus the best foam.

**EXAMPLE 1**

This example shows the impact of lactam on properties of polyurethanes.

| Formula (parts by wt) | 1A | 1B | 1C |
|---|---|---|---|
| Polyol 1 | 96.03 | 94.04 | 91.32 |
| Chain Extender 3 | 0.2 | 0.2 | 0.2 |
| Crosslinker 1 | 0.3 | 0.3 | 0.3 |
| Silicon oil 1 | 0.3 | 0.3 | 0.3 |
| Catalyst 1 | 0.5 | 0.5 | 0.5 |
| Catalyst 2 | 1.18 | 1.19 | 1.19 |
| Water | 1.49 | 1.49 | 1.49 |
| Caprolactam | 0 | 1.99 | 4.99 |
| Temperature of Components A and B (°C) | 40/40 | 40/40 | 40/40 |

(continued)

| Formula (parts by wt) | 1A | 1B | 1C |
|---|---|---|---|
| Isocyanate | Isocyanate 3 | Isocyanate 3 | Isocyanate 3 |
| Index | 75 | 86 | 83 |
| | | | |
| Cream time (s) | 5 | 5 | 4 |
| Full rise time (s) | 35 | 36 | 38 |
| Free rise density (g/L) | 135 | 139 | 132 |
| Article density (g/L) | 280 | 280 | 280 |
| Hardness (Asker C) | 52-55 | 48-50 | 49-49 |
| Rebound resilience (%) | 64 | 64 | 61 |
| Split tear strength (N/mm) | 1.67 | 2.15 | 2.3 |

The example shows that the presence of caprolactam can significantly increases split tear without reducing hardness and rebound (which is a key property for polyurethane foam's application as shoe sole).

**EXAMPLE 2**

This example shows the impact of silicon oil on properties of polyurethanes in the absence of lactam. Increasing amount of silicon oil is added in component A.

| Formula (parts by wt) | 2A | 2B | 2C |
|---|---|---|---|
| Polyol 1 | 96.03 | 95.72 | 95.44 |
| Chain Extender 3 | 0.2 | 0.2 | 0.2 |
| Crosslinker 1 | 0.3 | 0.3 | 0.3 |
| Silicon oil 1 | 0.3 | 0.3 | 0.3 |
| Silicon oil 2 | | 0.3 | 0.6 |
| Catalyst 1 | 0.5 | 0.5 | 0.5 |
| Catalyst 2 | 1.18 | 1.19 | 1.18 |
| Water | 1.49 | 1.5 | 1.49 |
| Caprolactam | 0 | 0 | 0 |
| Temperature of Components A and B (°C) | 40/35 | 40/35 | 40/38 |
| Isocyanate used | Isocyanate 3 | Isocyanate 3 | Isocyanate 3 |
| Index | 75 | 73 | 73 |
| | | | |
| Cream time (s) | 5 | 6 | 6 |
| Full rise time (s) | 35 | 40 | 42 |
| Free density (g/L) | 135 | 149 | 157 |
| Article density (g/L) | 280 | 280 | 280 |
| Hardness (Asker C) | 52-55 | 54-57 | 53-56 |
| Rebound resilience (%) | 64 | 65 | 65 |
| Split tear strength (N/mm) | 1.67 | 1.97 | 1.86 |

The experiment example shows that application of certain silicon oil can also slightly improve split tear without sacrificing other properties, such as hardness, high resilience. However, it can cause the increases of free rise density, which is not good for application as low density foam. Therefore, using silicon oil to increase split tear has to compromise the density. As stated in description section, using silicon oil to increase split tear will lead to heavier finished product, which is unacceptable to the consumer.

**EXAMPLE 3**

This example shows the impact of the combination of lactams and silicon oil on properties of polyurethanes.

| Formula (parts by wt) | 3A | 3B | 3C | 3D |
|---|---|---|---|---|
| Polyol 1 | 96.03 | 94.04 | 95.72 | 93.3 |
| Chain Extender 3 | 0.2 | 0.2 | 0.2 | 0.19 |
| Crosslinker 1 | 0.3 | 0.3 | 0.3 | 0.29 |
| Silicon oil 1 | 0.3 | 0.3 | 0.3 | 0.29 |
| Silicon oil 2 | | | 0.3 | 0.29 |
| Catalyst 1 | 0.5 | 0.5 | 0.5 | 0.19 |
| Catalyst 2 | 1.18 | 1.19 | 1.19 | 1.75 |
| Catalyst 3 | | | | 0.29 |
| Water | 1.49 | 1.49 | 1.5 | 1.45 |
| Caprolactam | 0 | 1.99 | 0 | 1.94 |
| Temperature of Components A and B (°C) | 40/35 | 38/35 | 40/35 | 35/35 |
| Isocyanate | Isocyanate 3 | Isocyanate 3 | Isocyanate 3 | Isocyanate 3 |
| Index | 75 | 86 | 73 | 82 |
| | | | | |
| Cream time (s) | 5 | 5 | 6 | 4 |
| Full rise time (s) | 35 | 36 | 40 | 32 |
| Free density (g/L) | 135 | 139 | 149 | 126 |
| Article density (g/L) | 280 | 280 | 280 | 280 |
| Hardness (Asker C) | 52-55 | 48-50 | 54-57 | 54-56 |
| Rebound resilience (%) | 64 | 64 | 65 | 60 |
| Split tear strength (N/mm) | 1.67 | 2.15 | 1.97 | 2.23 |

Polyurethane foam is produced in low pressure polyurethane casting machine. Experiment on injection machine shows the similar results.

It can be seen that presence of the combination of caprolactam and silicon oil increases split tear significantly without reducing rebound. This demonstrates the synergistic effect between caprolactam and silicone oil without impact to free rise density of the polyurethane system.

The test was repeated at higher silicon oil level.

| Formula (parts by wt) | 3E | 3F | 3G | 3H |
|---|---|---|---|---|
| Polyol 1 | 96.03 | 94.04 | 95.44 | 92.99 |
| Chain Extender 3 | 0.2 | 0.2 | 0.2 | 0.19 |
| Crosslinker 1 | 0.3 | 0.3 | 0.3 | 0.29 |
| Silicon oil 1 | 0.3 | 0.3 | 0.3 | 0.29 |

(continued)

| Formula (parts by wt) | 3E | 3F | 3G | 3H |
|---|---|---|---|---|
| Silicon oil 2 | | | 0.6 | 0.6 |
| Catalyst 1 | 0.5 | 0.5 | 0.5 | 0.19 |
| Catalyst 2 | 1.18 | 1.19 | 1.18 | 1.75 |
| Catalyst 3 | | | | 0.29 |
| Water | 1.49 | 1.49 | 1.49 | 1.45 |
| Caprolactam | 0 | 1.99 | 0 | 1.94 |
| Temperature of Components A and B (°C) | 40/35 | 38/35 | 40/38 | 35/33 |
| Isocyanate | Isocyanate 3 | Isocyanate 3 | Isocyanate 3 | Isocyanate 3 |
| Index | 75 | 86 | 73 | 82 |
| | | | | |
| Cream time (s) | 5 | 5 | 6 | 4 |
| Full rise time (s) | 35 | 36 | 42 | 43 |
| Free density (g/L) | 135 | 139 | 157 | 122 |
| Article density (g/L) | 280 | 280 | 280 | 280 |
| Hardness (Asker C) | 52-55 | 48-50 | 53-56 | 55 |
| Rebound resilience (%) | 64 | 64 | 65 | 60 |
| Split tear strength (N/mm) | 1.67 | 2.15 | 1.86 | 2.6 |
| * Polyurethane foam is produced in low pressure polyurethane casting machine. Experiment on injection machine shows the similar results. | | | | |

It can be seen that, under higher silicon oil level, split tear strength is even further improved without increasing free rise density or decreasing rebound significantly. This means that the synergistic effect is even higher under higher silicon oil level. This shows the possibility of achieving even better split tear at low free rise density.

**EXAMPLE 4**

This example demonstrates the capability of improving mechanical properties of polyester polyol based polyurethane in the presence of lactams. The polyisocyanate in component B is an prepolymer of polyisocyanate and polyester polyol, with polyester polyol at 18 mol% base on the amount of polyisocyanate, calculated by the amount of hydroxyl groups and isocyanate groups. That is, the polyisocyanate prepolymer is prepared by reacting an excess of the isocyanates with polyester polyols.

In another experiment, a mixture of polyether polyol and polyester polyol is used in component A to demonstrate the impact of lactams on mechanical properties of hybrid A component systems. It can be seen that, when there is a mixture of polytetrahydrofuran and polyester polyol in the polyurethane structure, caprolactam is improving split tear without compromising rebound.

| Formula (parts by wt) | 4A | 4B | 4C | 4D | 4E | 4G |
|---|---|---|---|---|---|---|
| Polyol 1 | 93.8 | 93.8 | 96.8 | 92.8 | 91.8 | 87.8 |
| Polyol 3 | | | | | 5 | 5 |
| Chain Extender 1 | 3 | 3 | | | | |
| Crosslinker 1 | 0.3 | 0.3 | 0.3 | 0.3 | 0.3 | 0.3 |
| Silicon oil 1 | 0.5 | 0.5 | 0.5 | 0.5 | 0.5 | 0.5 |

(continued)

| Formula (parts by wt) | 4A | 4B | 4C | 4D | 4E | 4G |
|---|---|---|---|---|---|---|
| Catalyst 1 | 1.2 | 1.2 | 1.2 | 1.2 | 1.2 | 1.2 |
| Water | 1.2 | 1.2 | 1.2 | 1.2 | 1.2 | 1.2 |
| Caprolactam | 0 | 4 | 0 | 4 | 0 | 4 |
| Temperature of Components A and B (°C) | 30/25 | 30/25 | 30/25 | 30/25 | 30/25 | 30/25 |
| Isocyanate | Isocyanate 4 | Isocyanate 4 | Isocyanate 3 | Isocyanate 3 | Isocyanate 3 | Isocyanate 3 |
| Index | / | / | / | / | / | / |
| | | | | | | |
| Cream time (s) | 14 | 9 | 16 | 10 | 16 | 11 |
| Full rise time (s) | 63 | 58 | 73 | 70 | 78 | 54 |
| Free density (g/L) | 155 | 132 | 196 | 158 | 192 | 152 |
| Article density (g/L) | 300 | 301 | 300 | 300 | 300 | 300 |
| Hardness (Asker C) | 42-45 | 45-45 | 45-47 | 45-47 | 50-50 | 50-51 |
| Rebound resilience (%) | 51 | 48 | 64 | 61 | 64 | 60 |
| Split tear strength (N/mm) | 1.86 | 2.04 | 2.68 | 2.95 | 2.64 | 3.08 |

## Claims

1. A composition to produce elastomeric microcellular foam comprising

   a polyisocyanate,
   a compound with at least two groups reactive toward isocyanates,
   a lactam,
   a surfactant, and
   a blowing agent.

2. The composition of claim 1, wherein the compound with at least two groups reactive toward isocyanates is a polyol.

3. The composition of claim 1 or 2, wherein the molar ratio of groups reactive toward isocyanates to the isocyanate group is in the range of 0.4:1 to 3:1.

4. The composition of any one of proceeding claims, wherein the lactam is the one with following formula:

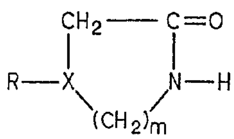

wherein X is a CH group, R is an hydrogen, m is an integer of 0 or an integer of 1, 2, 3, 4, 5, 6, 7, 8 or 9, or X is a nitrogen atom, R is a C1 to C18 alkyl group, a C7 to C15 aralkyl group or a pyridine group, which is optionally substituted with C1 to C6 alkyl groups, m is 3; preferably the lactam is selected from the group consisting of butyrolactam, valerolactam, caprolactam, 1-N-Methyl-hexyhydro-1,4-diazapinon-(3), 1-N-Ethyl-hexahydro-1,4- diazepinon-(3) and 1-N-Propyl-hexahydro-1,4-diazepinon-(3), more preferably ε-caprolactam.

**5.** The composition of any one of proceeding claims, wherein the lactam is at the level of 0.1% to 15%, preferably 0.5% to 5.5% by weight based on the total weight of composition except polyisocyanate.

**6.** The composition of any one of proceeding claims, wherein the surfactant is silicon oil, polydimethylsiloxane-polyoxyalkylene block copolymers, and/or nonylphenol ethoxylates.

**7.** The composition of claim 6, wherein the silicon oil is selected from the group consisting of polysiloxane and polyether-polydimethylsiloxane copolymer.

**8.** The composition of claim 6 or 7, wherein the silicon oil is at the level of 0.1% to 4%, preferably 0.5% to 4%, more preferably 0.5% to 2%, most preferably is 0.5% to 1% or 1% to 2% by weight based on the total weight of the composition except polyisocyanate.

**9.** The composition of any one of proceeding claims, wherein the compound with at least two groups reactive toward isocyanates is polyol, the polyol preferably comprises polytetrahydrofuran, preferably polytetrahydrofuran polyol, more preferably polytetrahydrofuran diol.

**10.** The composition of claim 9, wherein the polytetrahydrofuran is used at the level of 20% to 100%, preferably 40 to 100% by weight based on the total weight of the compound with at least two groups reactive toward isocyanates.

**11.** The composition of claim 9 or 10, wherein the compound with at least two groups reactive toward isocyanates further comprises one or more of polyether polyols other than polytetrahydrofuran, and/or polyester polyols, and/or a mixture thereof.

**12.** The composition of claim 11, wherein the one or more of polyether polyols other than polytetrahydrofuran, and/or polyester polyols, and/or a mixture thereof is at the level of 0 to 80%, preferably 0 to 60% by weight based on the total weight of the compound with at least two groups reactive toward isocyanates.

**13.** The composition of any one of claim 9 to 12, wherein the polyol is at the level of 71% to 99.7%, preferably 80% to 98% by weight based on based on the total weight of the composition except polyisocyanates.

**14.** The composition of any one of proceeding claims, wherein the polyisocyanates is monomeric polyisocyanate and/or polyisocyanate prepolymer; the polyisocyanate is preferably a prepolymer obtainable by reacting an excess of isocyanates with one or more compounds having at least two groups reactive toward isocyanates, preferably polyols, the NCO content of polyisocyanate prepolymers is preferably from 10% to 33% by weight in polyisocyanates.

**15.** The composition of any one of proceeding claims, wherein the composition comprises catalyst, chain extender and crosslinker; the total level of the catalyst, the chain extender, the crosslinker and the blowing agent is 0.1% to 10%, preferably is 3% to 7% by weight based on the total weight of the composition except polyisocyanates.

**16.** The elastomeric microcellular foam produced from the composition of any one of proceeding claims.

**17.** The use of the elastomeric microcellular foam of claim 16 in footwear foam or synthetic leather.

**18.** The use of lactam in improving split tear of elastomeric microcellular foam, wherein the elastomeric microcellular foam is produced from the composition of any one of claims 1 to 15.

**Patentansprüche**

**1.** Zusammensetzung zur Herstellung von elastomerem mikrozellulärem Schaumstoff, umfassend

ein Polyisocyanat,
eine Verbindung mit mindestens zwei gegenüber Isocyanaten reaktiven Gruppen,
ein Lactam,

ein Tensid und
ein Treibmittel.

2. Zusammensetzung nach Anspruch 1, wobei es sich bei der Verbindung mit mindestens zwei gegenüber Isocyanaten reaktiven Gruppen um ein Polyol handelt.

3. Zusammensetzung nach Anspruch 1 oder 2, wobei das Molverhältnis von gegenüber Isocyanaten reaktiven Gruppen zu der Isocyanatgruppe im Bereich von 0,4:1 bis 3:1 liegt.

4. Zusammensetzung nach einem der vorhergehenden Ansprüche, wobei es sich bei dem Lactam um ein Lactam mit der folgenden Formel handelt:

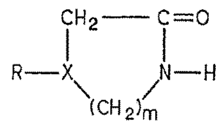

wobei X für eine CH-Gruppe steht, R für Wasserstoff steht, m für eine ganze Zahl mit einem Wert von 0 oder eine ganze Zahl mit einem Wert von 1, 2, 3, 4, 5, 6, 7, 8 oder 9 steht, oder X für ein Stickstoffatom steht, R für eine C1- bis C18-Alkylgruppe, eine C7- bis C15-Aralkylgruppe oder eine Pyridingruppe, die gegebenenfalls durch C1- bis C6-Alkylgruppen substituiert ist, steht, m für 3 steht; das Lactam vorzugsweise aus der Gruppe bestehend aus Butyrolactam, Valerolactam, Caprolactam, 1-N-Methylhexahydro-1,4-diazepinon-(3), 1-N-Ethylhexahydro-1,4-diazepinon-(3) und 1-N-Propyl-hexahydro-1,4-diazepinon-(3), weiter bevorzugt ε-Caprolactam, ausgewählt ist.

5. Zusammensetzung nach einem der vorhergehenden Ansprüche, wobei das Lactam in einem Gehalt von 0,1 bis 15 Gew.-%, vorzugsweise 0,5 bis 5,5 Gew.-%, bezogen auf das Gesamtgewicht der Zusammensetzung mit Ausnahme von Polyisocyanat, vorliegt.

6. Zusammensetzung nach einem der vorhergehenden Ansprüche, wobei es sich bei dem Tensid um Silikonöl, Polydimethylsiloxan-Polyoxyalkylen-Blockcopolymere und/oder Nonylphenolethoxylate handelt.

7. Zusammensetzung nach Anspruch 6, wobei das Silikonöl aus der Gruppe bestehend aus Polysiloxan und Polyether-Polydimethylsiloxan-Copolymer ausgewählt ist.

8. Zusammensetzung nach Anspruch 6 oder 7, wobei das Silikonöl in einem Gehalt von 0,1 bis 4 Gew.-%, vorzugsweise 0,5 bis 4 Gew.-%, weiter bevorzugt 0,5 bis 2 Gew.-%, ganz besonders bevorzugt 0,5 bis 1 Gew.-% oder 1 bis 2 Gew.-%, bezogen auf das Gesamtgewicht der Zusammensetzung mit Ausnahme von Polyisocyanat, vorliegt.

9. Zusammensetzung nach einem der vorhergehenden Ansprüche, wobei es sich bei der Verbindung mit mindestens zwei gegenüber Isocyanaten reaktiven Gruppen um ein Polyol handelt, wobei das Polyol vorzugsweise Polytetrahydrofuran, vorzugsweise Polytetrahydrofuranpolyol, weiter bevorzugt Polytetrahydrofurandiol, umfasst.

10. Zusammensetzung nach Anspruch 9, wobei das Polytetrahydrofuran in einem Gehalt von 20 bis 100 Gew.-%, vorzugsweise 40 bis 100 Gew.-%, bezogen auf das Gesamtgewicht der Verbindung mit mindestens zwei gegenüber Isocyanaten reaktiven Gruppen, verwendet wird.

11. Zusammensetzung nach Anspruch 9 oder 10, wobei die Verbindung mit mindestens zwei gegenüber Isocyanaten reaktiven Gruppen ferner ein oder mehrere Polyetherpolyole, die von Polytetrahydrofuran verschieden sind, und/oder Polyesterpolyole und/oder eine Mischung davon umfasst.

12. Zusammensetzung nach Anspruch 11, wobei das eine oder die mehreren Polyetherpolyole, die von Polytetrahydrofuran verschieden sind, und/oder Polyesterpolyole und/oder eine Mischung davon in einem Gehalt von 0 bis 80 Gew.-%, vorzugsweise 0 bis 60 Gew.-%, bezogen auf das Gesamtgewicht der Verbindung mit mindestens zwei gegenüber Isocyanaten reaktiven Gruppen, vorliegen.

13. Zusammensetzung nach einem der Ansprüche 9 bis 12, wobei das Polyol in einem Gehalt von 71 bis 99,7 Gew.-%, vorzugsweise 80 bis 98 Gew.-%, bezogen auf das Gesamtgewicht der Zusammensetzung mit Ausnahme von Polyisocyanaten, vorliegt.

**14.** Zusammensetzung nach einem der vorhergehenden Ansprüche, wobei es sich bei den Polyisocyanaten um monomeres Polyisocyanat und/oder PolyisocyanatPrepolymer handelt; wobei es sich bei dem Polyisocyanat vorzugsweise um ein Prepolymer handelt, das durch Umsetzen eines Überschusses von Isocyanaten mit einer oder mehreren Verbindungen mit mindestens zwei gegenüber Isocyanaten reaktiven Gruppen, vorzugsweise Polyolen, erhältlich ist, wobei der NCO-Gehalt von Polyisocyanat-Prepolymeren vorzugsweise 10 bis 33 Gew.-% in Polyisocyanaten beträgt.

**15.** Zusammensetzung nach einem der vorhergehenden Ansprüche, wobei die Zusammensetzung Katalysator, Kettenverlängerungsmittel und Vernetzer umfasst; wobei der Gesamtgehalt des Katalysators, des Kettenverlängerungsmittels, des Vernetzers und des Treibmittels 0,1 bis 10 Gew.-%, vorzugsweise 3 bis 7 Gew.-%, bezogen auf das Gesamtgewicht der Zusammensetzung mit Ausnahme von Polyisocyanaten, beträgt.

**16.** Elastomerer mikrozellulärer Schaumstoff, hergestellt aus der Zusammensetzung nach einem der vorhergehenden Ansprüche.

**17.** Verwendung des elastomeren mikrozellulären Schaumstoffs nach Anspruch 16 in Schaumstoff für Schuhwerk oder Kunstleder.

**18.** Verwendung von Lactam zur Verbesserung der Weiterreissfestigkeit von elastomerem mikrozellulärem Schaumstoff, wobei der elastomere mikrozelluläre Schaumstoff aus der Zusammensetzung nach einem der Ansprüche 1 bis 15 hergestellt wird.

## Revendications

**1.** Composition pour produire une mousse microcellulaire élastomérique comprenant

un polyisocyanate,
un composé comportant au moins deux groupes réactifs envers des isocyanates,
un lactame,
un tensioactif, et
un agent de gonflement.

**2.** Composition selon la revendication 1, le composé comportant au moins deux groupes réactifs envers des isocyanates étant un polyol.

**3.** Composition selon la revendication 1 ou 2, le rapport molaire de groupes réactifs envers des isocyanates sur le groupe isocyanate étant dans la plage de 0,4 : 1 à 3 : 1.

**4.** Composition selon l'une quelconque des revendications précédentes, le lactame étant celui comportant une formule suivante :

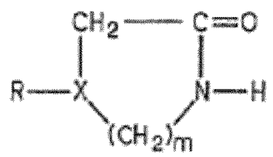

X étant un groupe CH, R étant un hydrogène, m étant un entier de 0 ou un entier parmi 1, 2, 3, 4, 5, 6, 7, 8 ou 9, ou X étant un atome d'azote, R étant un groupe alkyle en C1 à C18, un groupe aralkyle en C7 à C15 ou un groupe pyridine, qui est éventuellement substitué par des groupes alkyle en C1 à C6, m étant 3 ; préférablement le lactame étant choisi dans le groupe constitué par le butyrolactame, le valérolactame, le caprolactame, la 1-N-Méthyl-hexyhydro-1,4-diazapinone-(3), la 1-N-Éthyl-hexahydro-1,4-diazépinone-(3) et la 1-N-Propyl-hexahydro-1,4-diazépinone-(3), plus préférablement l'ε-caprolactame.

**5.** Composition selon l'une quelconque des revendications précédentes, le lactame étant présent au taux de 0,1 % à 15 %, préférablement de 0,5 % à 5,5 % en poids sur la base du poids total d'une composition sauf un polyisocyanate.

6. Composition selon l'une quelconque des revendications précédentes, le tensioactif étant une huile de silicone, des copolymères à bloc de polydiméthylsiloxane-polyoxyalkylène, et/ou des éthoxylates de nonylphénol.

7. Composition selon la revendication 6, l'huile de silicone étant choisie dans le groupe constitué par un polysiloxane et un copolymère de polyéther-polydiméthylsiloxane.

8. Composition selon la revendication 6 ou 7, l'huile de silicone étant présente au taux de 0,1 % à 4 %, préférablement de 0,5 % à 4 %, plus préférablement de 0,5 % à 2 %, le plus préférablement représentant 0,5 % à 1 % ou 1 % à 2 % en poids sur la base du poids total de la composition sauf un polyisocyanate.

9. Composition selon l'une quelconque des revendications précédentes, le composé comportant au moins deux groupes réactifs envers des isocyanates étant un polyol, le polyol comprenant préférablement un polytétrahydrofuranne, préférablement un polytétrahydrofuranne polyol, plus préférablement un polytétrahydrofuranne diol.

10. Composition selon la revendication 9, le polytétrahydrofuranne étant utilisé au taux de 20 % à 100 %, préférablement de 40 à 100 % en poids sur la base du poids total du composé comportant au moins deux groupes réactifs envers des isocyanates.

11. Composition selon la revendication 9 ou 10, le composé comportant au moins deux groupes réactifs envers des isocyanates comprenant en outre l'un ou plusieurs parmi des polyéther polyols autres qu'un polytétrahydrofuranne, et/ou des polyester polyols, et/ou un mélange correspondant.

12. Composition selon la revendication 11, le ou les polyéther polyols autres qu'un polytétrahydrofuranne et/ou des polyester polyols, et/ou un mélange correspondant étant présents au taux de 0 à 80 %, préférablement de 0 à 60 % en poids sur la base du poids total du composé comportant au moins deux groupes réactifs envers des isocyanates.

13. Composition selon l'une quelconque des revendications 9 à 12, le polyol étant présent au taux de 71 % à 99,7 %, préférablement de 80 % à 98 % en poids sur la base du poids total de la composition sauf des polyisocyanates.

14. Composition selon l'une quelconque des revendications précédentes, les polyisocyanates étant un polyisocyanate monomérique et/ou un prépolymère de polyisocyanate ; le polyisocyanate étant préférablement un prépolymère pouvant être obtenu par mise en réaction d'un excès d'isocyanates avec un ou plusieurs composés ayant au moins deux groupes réactifs envers des isocyanates, préférablement des polyols, la teneur en NCO de prépolymères de polyisocyanate étant préférablement de 10 % à 33 % en poids en polyisocyanates.

15. Composition selon l'une quelconque des revendications précédentes, la composition comprenant un catalyseur, un agent d'allongement de chaînes et un agent de réticulation ; le taux total du catalyseur, de l'agent d'allongement de chaînes, de l'agent de réticulation et de l'agent de gonflement étant de 0,1 % à 10 %, préférablement étant de 3 % à 7 % en poids sur la base du poids total de la composition sauf des polyisocyanates.

16. Mousse microcellulaire élastomérique produite à partir de la composition selon l'une quelconque des revendications précédentes.

17. Utilisation de la mousse microcellulaire élastomérique selon la revendication 16 dans une mousse pour chaussures ou un cuir synthétique.

18. Utilisation de lactame dans l'amélioration de la déchirure sur refente d'une mousse microcellulaire élastomérique, la mousse microcellulaire élastomérique étant produite à partir de la composition selon l'une quelconque des revendications 1 à 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1225199 A1

### Non-patent literature cited in the description

- **SAWAI.** *Journal of Cellular Plastics,* 2000, vol. 36, 286